Europäisches Patentamt

European Patent Office

Office européen des brevets

(19)

(11) Veröffentlichungsnummer: **0 088 217**
**B1**

# EUROPÄISCHE PATENTSCHRIFT

(45) Veröffentlichungstag der Patentschrift:
09.04.86

(21) Anmeldenummer: 83100696.0

(22) Anmeldetag: 26.01.83

(51) Int. Cl.⁴: **B 29 D 23/20**, B 29 C 45/14

(54) Vorrichtung zum Anspritzen eines Kunststoffteiles an einen Abschnitt aus flexiblem, bahnförmigem Material.

(30) Priorität: 04.03.82 DE 3207701

(43) Veröffentlichungstag der Anmeldung:
14.09.83 Patentblatt 83/37

(45) Bekanntmachung des Hinweises auf die Patenterteilung:
09.04.86 Patentblatt 86/15

(84) Benannte Vertragsstaaten:
AT BE CH DE FR GB IT LI NL SE

(56) Entgegenhaltungen:
CH - A - 325 562
CH - A - 392 865
DE - A - 2 122 611
DE - B - 2 123 472
DE - U - 1 963 964
US - A - 3 973 888
US - A - 4 351 629

(73) Patentinhaber: Tetra Pak Développement SA, 70,
Avenue C.F. Ramuz, CH-1009 Pully-Lausanne (CH)

(72) Erfinder: Rell, Wilhelm, Altengassweg 16,
D-6142 Bensheim 1 (DE)
Erfinder: Deutschbein, Ulrich, Am Hansenberg 3,
D-6109 Mühltal 3 (DE)
Erfinder: Wallich, Manfred, Wilhelm-Leibl-Strasse 2,
D-6085 Nauheim (DE)

(74) Vertreter: Weber, Dieter, Dr. et al, Dr. Dieter Weber und
Klaus Seiffert Patentanwälte
Gustav-Freytag-Strasse 25 Postfach 6145,
D-6200 Wiesbaden 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**0 088 217**

## Beschreibung

Die Erfindung betrifft eine Vorrichtung zum Anspritzen eines Kunststoffteiles an einen Abschnitt aus flexiblem, bahnförmigem Material, mit einer Gesamtspritzeinheit mit Düse, mit Anspritzkopfteil, mit Außenformteil und mit einem relativ zu diesen bewegbaren Kern (CH-A- 325 562).

In der Verpackungsindustrie ist es allgemein bekannt, Kunststoffteile an andere Verpackungsbabschnitte anzuspritzen, insbesondere als Verschluß oder Deckel. Derartige Kunststoffteile können an unterschiedliche Materialien, wie z.B. beschichtete oder unbeschichtete Papiere, Kunststoffe oder Metalle, um nur einige Anwendungen zu nennen, angespritzt werden.

Beim Einsatz von Einfachwerkzeugen der vorgenannten Art ist die Leistung der Maschine verhältnismäßig gering. Man hat daher auch schon Vielfachwerkzeuge erstellt, die nebeneinander, in einem Kranz oder auf andere Weise an einer Halterung befestigt sind und verschiedene Formen haben, die auf Gegenformen bzw. Kerne aufgedrückt werden. Nach. der Schließbewegung des Formwerkzeuges wird der Kunststoff in den sich ergebenden Formraum eingespritzt, und die Werkzeugteile bleiben dann so lange in dieser Position, bis der Spritzling gekühlt und ausgehärtet ist. Erst nach verhält-nismäßig langer Zeit erfolgt bei diesen Vielfachwerkzeugen dann der nächste Takt.

Aufgabe der vorliegenden Erfindung ist die Schaffung einer Anspritzvorrichtung der eingangs genannten Art, mit welcher mit einem Einfachwerkzeug bei fortlaufender Zufuhr des bahnförmigen Materials dennoch eine hohe Leistung erreicht werden kann. Dies soll auch unter der Bedingung gelten, daß der Spritzstation ein Abschnitt aus Fremdmaterial, z.B. ein Behälterzuschnitt, zu- und abgeführt werden muß.

Die Lösung dieser Aufgabe gelingt erfindungsgemäß dadurch, daß der Kern auf der Stirn eines den Materialabschnitt mitführenden Dornes angebracht ist, welcher Teil eines um seine Antriebsachse taktweise angetrieben drehbaren Dornrades ist, dessen Dorne radial in einer Ebene abstehend vorgesehen sind, daß das Außenformteil zur Freigabe der Kreisbahn des Dornes mindestens zweiseitig zum Dorn auseinander- und zusammenbewegbare Formteile aufweist, die zum Zusammenhalten düsenseitig mit einer beweglichen Kopfplatte in form- und kraftschlüssigen Eingriff bringbar sind. Insbesondere für die Herstellung von Packungen für fließfähige Füllgüter ist damit die Möglichkeit geschaffen, z.B. Kunststoffdeckel oder -böden auf ein Ende eines Tubus aus mit thermoplastischem Kunststoff beschichteten Papier aufzuspritzen. Hierbei wird das Dornrad der vorstehend beschriebenen Art eingesetzt, dessen betreffender Dorn für den Spritzvorgang den Materialabschnitt, im speziellen Ausführungsbeispiel den Tubus, hält. Dabei wird durch die Drehung des jeweiligen Dornes mitsamt dem Dornrad dasjenige freie Ende des Tubus, an welches der Kunststoffdeckel angespritzt werden soll, in Flucht zu der Spritzmaschine gedreht. Die Dorne stellen hierbei Spritzwerkzeugunterteile dar, d.h. Kernträger, und der Spritzraum wird zur Seite hin durch die Außenformteile, nach oben hin durch die Kopfplatte gebildet.

Die Schwierigkeit bei einer derartigen Ausführungsform besteht darin, die im Spritzraum erzeugten hohen Drücke aufzunehmen. Dies erfolgte bisher zumeist vom Kern des Spritzwerkzeuges her, weshalb man hier von der Seite des Dornes die hohen Drücke aufnehmen müßte, z.B. über Kniehebel oder hydraulische Verschlüsse. Die Lagerung des Dornrades erlaubt aber nicht ohne weiteres die Aufnahme dieser hohen Kräfte über das Lager bzw. über einen Flansch eines Getriebes, und Raum für Kniehebel oder andere robuste Verschlüsse im Bereich des Dornes, d.h. neben dem Kernträger, besteht wegen des Antriebes des Dornrades nicht.

Durch den Einsatz des Dornrades mit der Vielzahl von senkrecht zur Drehachse, nämlich in einer Ebene radial herausstehenden Dornen kann der Takt der neuen Anspritzvorrichtung sehr kurz ausgestaltet werden. Obwohl in einer fortlaufenden Materialbahn Abschnitte zugeführt werden, sei es daß diese Bahn fortlaufend an einem Stück oder fortlaufend in Gestalt separierter Abschitte bewegt wird, kann dennoch eine hohe Leistung erreicht werden, wobei überdies der jeweilige Abschnitt vor dem Spritzen auf den Dorn aufgezogen und nach dem Spritzen von dem Dorn wieder abgeführt werden kann. Auf diese Weise ist insbesondere die Zuführmöglichkeit des Bahnmaterials vereinfacht. Aber auch die Gesamtmaschine ist einfacher; denn zum einen ist die Verwendung eines Einfachwerkzeuges ersichtlich leichter zu beherrschen und zu steuern als bei einem Mehrfachwerkzeug, wenn man an die zahlreichen unterschiedlichen Bedingungen denkt, z.B. die Wartung. Vorteilhaft ist es durch die Verwendung eines Einfachwerkzeuges auch, daß dann ein Spritzling wie der andere aussieht, während bei Mehrfachwerkzeugen häufig geringfügige Unterschiede unvermeidlich sind.

Auch der von dem Spritzraum nach außen wirkende Druck, welcher durch das Spritzen selbst entsteht, kann durch den Aufbau gemäß der Erfindung besser aufgefangen werden; denn durch die beschriebenen robusten Bauteile können die den Druck aufnehmenden Verschlüsse am richtigen Platz angeordnet werden. Beispielsweise wird die erwähnte Kopfplatte beweglich derart angeordnet, daß sie im Falle von nur zwei Außenformteilen diese zwei Formteile kraft- und formschlüssig dadurch zusammenhält, daß sie passend über eine Zylinderfläche oder eine Kegelstumpffläche gestülpt werden kann, während zum Auseinanderfahren der Außenformteile die Kopfplatte von dieser Zylinder- oder Kegelstumpffläche abhebbar ist. Das Auseinanderfahren der Außenformteile bringt mit Vorteil Platz für das Herausdrehen des Dornes aus der Spritzstellung und das Hereindrehen eines neuen Dornes in die Spritzstellung. Auf diese Weise kann man trotz Verwendung eines Einfachwerkzeuges der Gesamtspritzeinheit, die Leistung der Spritzmaschine erheblich verbessern. Mit dem Öffnen der Außenformteile und dem Herausdrehen des Dornes aus der Spritzstellung in die nächstfolgende Stellung hat der Spritzling Zeit zum Erkalten und Aushärten.

Dabei ist es besonders zweckmäßig, wenn erfindungsgemäß das Dornrad von einem Schrittschaltgetriebe antreibbar ist, von welchem in synchron gekoppelter Bewegung die Außenformteile angetrieben sind. Die

2

Vorrichtung gemäß der Erfindung hat vorzugsweise zwei Antriebe, das Schrittschaltgetriebe für das Dornrad und die auseinanderbewegbaren Außenformteile einerseits sowie z.B. eine hydraulische Antriebseinrichtung für die im wesentlichen geradlinige Bewegung der Gesamtspritzeinheit und der Kopfplatte auf den Kern hin und von diesem fortandererseits. Beide Antriebseinheiten sind miteinander synchronisiert. Antrieb und Bewegung erfolgen dann derart, daß nach dem Aufschieben eines Materialabschnittes, z.B. eines Behälterabschnittes, vorzugsweise eines hohlzylinderförmigen Teils, eines Tubus oder einer Hülse, auf den einen Dorn dieser infolge der Drehung des Dornrades in die Hauptachse und damit Zentralachse des Spritzwerkzeuges hineingeschwenkt wird. Währenddessen hat der Antrieb ferner dafür gesorgt, daß die mindestens zwei Außenformteile derart auseinanderbewegt worden sind, daß der zuvor in der Spritzposition angeordnete Dorn als Kernträger und damit auch der Kern Platz genug haben, herausgedreht zu werden. Der zuvor beschriebene Dorn mit dem neu aufgezogenen Tubus oder anderweitig geformten Abschnitt hat dann Platz und Zeit genug, um in die Spritzposition hineingeschwenkt zu werden. Nach Erreichen dieser Spritzposition werden die Außenformteile zusammengeführt und um das stirnseitige Ende des Dornes, d.h. um den Kern herumgelegt, um den Spritzraum durch die mehrteilige Außenform, ferner vom Kern her von unten und schließlich vonder Kopfplatte von oben zu bilden. Die bewegliche Kopfplatte dient der Sicherung der auseinanderbewegbaren Außenformteile gegen seitliche bzw. radiale Bewegungen infolge der im Spritzraum entstandenen Drücke. Nach dem Zusammenfahren der Außenformteile und während des Aufsetzens der Kopfplatte zum Sichern wird die Gesamtspritzeinheit zur Einleitung des Spritzvorganges herangeführt.

Bevorzugt ist es erfindungsgemäß, wenn das Dornrad in zwei stationären Lagerplatten drehbar gelagert ist, die über Zuganker mit einer Hauptträgerplatte verbunden sind, und wenn die Gesamtspritzeinheit an einem an der Hauptträgerplatte befestigten Tragständer linear beweglich gehalten ist. Die hohen beim Spritzen auftretenden Drücke, die sich zwangsläufig auch durch den Kern des Spritzwerkzeuges und den Kernträger, d.h. den Dorn fortsetzen, werden über die erwähnten Zuganker zu einer Hauptträgerplatte geleitet, wo trotz der Verwendung eines Dornrades mit dem entsprechenden Antrieb (Schrittschaltgetriebe) hinreichend Platz vorhanden ist für kräftige Verankerungs- und Schraubelemente. Die Zuganker selbst können durch kräftige Ständer, Pfosten oder Stangen gebildet sein. Diese Hauptträgerplatte kann vorzugsweise aus Metallguß hergestellt werden und in Rahmenform ausgestaltet sein, so daß sich hier ein stationärer Träger für alle Teile der Spritzmaschine anbietet. Auch die Gesamtspritzeinheit ist deshalb über den an dieser Hauptträgerplatte befestigten Tragständer gehalten.

Zur Vereinfachung der Antriebe ist bei weiterer vorteilhafter Ausgestaltung der Erfindung vorgesehen, daß an der Gesamtspritzeinheit eine Kupplung zur Verbindung von Antriebsstangen befestigt ist, welche die Kopfplatte mittels einer Gelenkeinrichtung antreiben und gegebenenfalls verriegeln. Es handelt sich hierbei um eine feste Kupplung, welche die Bewegung der Gesamtspritzeinheit direkt auf angeschlossene Antriebsstangen überträgt, durch welche die Bewegung der Kupplungsplatte gesteuert wird. Dieser Antrieb sorgt auch für die Verriegelungsmöglichkeit, bei welcher die Kopfplatte die Außenformteile sichert und verriegelt. Vorzugsweise wird für den Bewegungsantrieb der Kopfplatte eine Gelenkeinrichtung eingesetzt, z.B. eine Kniehebeleinrichtung, um auch hohe Kräfte erzeugen zu können und die Verriegelung zu ermöglichen. Überhaupt sind bei der Vorrichtung gemäß der Erfindung Einheiten eingesetzt, welche einen kräftigen Aufbau und hohe Festigkeit haben, um die im Zusammenhang mit dem Spritzvorgang auftretenden Drücke zusätzlich zu den Werkzeuggewichten und Massen aufnehmen zu können.

Besonders vorteilhaft ist es gemäß der Erfindung, wenn zwischen dem Kern und den Außenformteilen ein Spalt vorgesehen ist, dessen Größe etwas kleiner, vorzugsweise etwa 10 % geringer, als die Dicke des in diesem Spalt dichtend aufzunehmenden, den Spritzraum begrenzenden, flexiblen, bahnförmigen Materials ist. Wünscht man beispielsweise das Anspritzen von Kunststoffteilen an eine Kante eines ebenen Materialabschnittes, so kann man diesen ebenso mit dem Dorn, z.B. in einer Nut, ergreifen und steuern wie einen Behälterabschnitt. Für alle möglichen Gestaltungen des bahnförmigen Materialabschnittes gilt aber die neue Überlegung, den Spritzraum nicht durch Maschinenteile allein, sondern letztlich über das bahnförmige Material dichtend abzuschließen, d.h. den Spritzraum mit Hilfe des bahnförmigen Materials an mindestens einer Stellezu begrenzen. Dies geschieht dadurch, daß zwischen zwei den Spritzraum formenden Maschinenteilen, z.B. Formteilen, hier vorzugsweise zwischen dem Kern und den Außenformteilen, das bahnförmige Material derart eingeklemmt wird, daß sein freies Ende ein Stück weit in den Spritzraum hineinragt. Dadurch ist erstmals ein Spritzraum durch das Material selbst wenigestens teilweise begrenzt vorgesehen, an welches der Spritzling anzufügen ist. Die Ausbildung der Größe des Spaltes etwas kleiner als die Dicke des bahnförmigen Materials dient dem dichtenden Andrücken, da flexibles Material um etwa 10 % seiner Materialdicke zusammendrückbar ist.

Zweckmäßig ist es hierbei, wenn der auf dem Dorn aufgeklemmte Abschnitt aus flexiblem, bahnförmigem Material derart weit aus dem Spalt in den Spritzraum - an der Innenfläche der Außenformteile anliegend - hineinragt, daß die unbeschichtete stirnseitige Schnittfläche des Abschnittes mindestens im Abstand von 1/2 mm von der oberen den Spritzraum betrenzenden Fläche angeordnet ist. Insbesondere bei der Ausführungsform des Papiers oder der Pappe als Trägermaterial, die beidseitig zur Schaffung einer Flüssigkeitsdichtigkeit mit Kunststoff beschichtet ist, wird durch das Vereinzeln des jeweiligen Abschnittes von einer von einer Rolle zugeführten Bahn eine Schnittfläche geschaffen, die dann nicht beschichtet ist. Das Kunststoffteil soll dann insbesondere auf diese unbeschichtete Stirnfläche aufgelegt werden, und deshalb muß der Spritzraum in direkter Berührung mit dieser Schnittfläche stehen, so daß über der Schnittfläche ein Freiraum in der Höhe von mindestens 1/2 mm vorhanden sein muß.

3

Die Maßnahme, daß der Abschnitt aus bahnförmigem Material an der Innenfläche der Außenformteile anliegt, sorgt mit Vorteil dafür, daß das durch die Düse eingespritzte Kunststoffmaterial nicht etwa zwischen der Außenfläche des bahnförmigen Materials und der Innenfläche der Außenformteile gelangt, sondern nur auf der gegenüberliegenden Seite und auf die Stirnfläche gespritzt wird, während das bahnförmige Material in inniger Berührung an der Innenfläche der Außenformteile liegen bleibt. Der Spritzraum ist mit diesen Maßnahmen derart gestaltet, daß der Kunststoff-fluß zuerst auf die Innenseite des bahnförmigen Materials gelangt und dann zusätzlich auf die Stirnseite bzw. stirnseitige Schnittfläche, um auf diese Weise das bahnförmige Material mit Druck auf die Innenfläche der Außenformteile zu legen und deren Anlage dort zu unterstützen. Das flexible, bahnförmige Material ragt über das Ende des erwähnten Spaltes zwischen Kern und Außenformteilen, welches an der Grenze zum Spritzraum hin liegt, ein Stück weit zum Kern hin frei in den Spritzraum hinein.

Vorteilhaft ist es erfindungsgemäß ferner, wenn jeder Dorn runden.Querschnitt hat, in Spritzstellung des Dornes seine Zentralachse in Flucht zur Zentralachse der Gesamtspritzeinheit liegt und mindestens zwei Zuganker parallel zum Dorn am Umfang mit Abstand angeordnet sind. Die Zentralachse ist die oben erwähnte Hauptachse der Gesamtspritzeinheit, die parallel zu dem erwähnten Tragständer verläuft und zu der längs die oben erwähnte Bewegung der Gesamtspritzeinheit erfolgt. Besonders zweckmäßig ist es hier, wenn jeweils unter einem Winkelabstand von 90° am Umfang vier Zuganker parallel zum Dorn um diesen herum angeordnet sind, wodurch die Gelenkeinrichtung für die Steuerung der Kopfplatte in dem unteren Bereich der Gesamtspritzeinheit, vorzugsweise dort, wo deren Düse vor- und zurückbewegt wird, angeordnet werden kann.

Deshalb ist die vorstehend beschriebene Vorrichtung besonders zweckmäßig anwendbar zum Anspritzen eines Kunststoffdeckels auf einen Tubus aus flexiblem, bahnförmigem Material, insbesondere mit thermoplastischem Kunststoff beschichtetem papier, für die Herstellung von Flüssigkeitspackungen.

Als Antrieb für das Dornrad wird vorzugsweise ein Schrittschaltgetriebe verwendet, aus welchem seitlich die Antriebswelle für das Dornrad heraussteht und in der stationären Lagerplatte gehaltert ist. Bei einer speziellen Ausführungsform wird der jeweilige Behälterabschnitt, z.B. ein Tubus mit einer Länge von 25 cm, auf einer den Außen-formteilen gegenüberliegenden Seite aufgenommen und im rechten Winkel oder unter einem anderen Winkel dazu versetzt und in die Hauptachse der Gesamtspritzeinheit hereingeschwenkt. Die zur Aufnahme der beim Spritzen entstehenden Drücke dienende Lagerung ist durch die kräftig ausgebildeten stationären Lagerplatten vorgesehen. Diese können aber über die Zuganker die Kräfte an eine Stelle in der Vorrichtung weiterleiten, wo Platz genug für Befestigungselemente vorhanden ist, während im Bereich der Antriebswelle des Dornrades dieser platz nicht vorhanden ist. Auf diese Weise können.die Einzelteile der Gelenkeinrichtung für den Antrieb der Kopfplatte eine hohe Vorspannungerzeugen und damit die hohen Drücke des Spritzlings auffangen.

Gegenüber allen bisher bekannten Anspritzvorrichtungen wird erfindungsgemäß also die Basis des Kernträgers in taktweise Drehbewegung versetzt. Mit anderen Worten dreht sich die Basis des Kernträgers um eine eigene Achse. Dadurch wird eine Anpassung des Spritzwerkzeuges an die kontinuierlich sich bewegende Materialbahn geschaffen, so daß das beschichtete Teil oder bespritzte Teil des bahnförmigen Materials sogleich nach dem Spritzvorgang freigegeben wird. Man erkennt, daß hierdurch trotz Verwendung eines Einfachwerkzeuges die Leistung der Maschine erheblich verbessert werden kann. Dies gilt für alle Gestalten von Abschnitten, z.B. Stücke in ebenen oder wenigstens teilweise gekrümmten Flächen, wobei hier insbesondere an einem Tubus unterschiedlichen Querschnittes gedacht ist, z.B. vielekkig, oval, kreisförmig usw. Während bei den bisher bekannten Spritzvorrichtungen der Spritzraum durch metallische Berührung zwischen Kern und Außenformteilen erfolgte, um die durch das Spritzen auftretenden hohen Drücke gut aufzufangen und vor allen Dingen einen Dichtschluß zu schaffen, begrenzt erfindungsgemäß bei der Ausführungsform des Tubus dessen Kante den Spritzraum. In diesem betrachteten Falle des Tubus, insbesondere aus mit Kunststoff beschichtetem papier, befindet sich also zwischen den Außenform-teilen des Werkzeuges und dem Kern ein hohlzylinderförmiger Raum zur Aufnahme dieses Tubus bzw. des Hülsenendes, wobei dieser Raum durch den oben beschriebenen Spalt geschaffen ist. Beim Eindringen des Kunststoffes aus der Düse in den Spritzraum entweicht übrigens die Luft teilweise durch die Kanülen im Papier, wodurch die Maßnahme noch weiter begünstigt wird, daß die Kraftrichtung des Spritzdruckes das Hülsenende nach außen in Anlage an die Innenfläche der Außenformteile drängt und dort hält. Auf diese Weise gelangt Kunststoff nicht zwischen Hülse und Außen-formteil, sondern nur an den Innenrand der später fertigen Packung und auf die stationäre Schnittfläche.

Vorteilhaft kann man die Leistung der Maschine noch dadurch steigern, daß der Aufbau der Vorrichtung die Anordnung der Spritzstation außerhalb der Stationen für die Zuund Abfuhr ermöglicht.

Zur Vergrößerung der Stillstandszeiten der jeweiligen Dorne unter Beibehaltung der Sinusfunktion des Bewegungsablaufes des Schrittschaltgetriebes ist es erfindungsgemäß zweckmäßig, wenn das Schrittschaltgetriebe des taktweise drehbaren Dornrades über eine Kurbelschwinge angetrieben ist, die ein um eine Achse drehbares Klemmstück mit daran befestigter Nocke aufweist, von welcher ein Nockenfolger geführt angetrieben ist, wenn der Nockenfolger auf einem Antriebshebel sitzt, dessen Achse gleich der Achse des Schrittschaltgetriebes ist, und wenn die Achse des Klemmstückes sowie die Achse des Schrittschaltgetriebes einen Abstand voneinander haben. Als Nocke kann man eine beliebige Kurve vorsehen, die mit dem jeweiligen Nockenfolger stets in Eingriff sein sollte. Als Antriebshebel, auf welchem der Nockenfolger sitzt, kann man eine Kurbel, eine Scheibe oder ähnliche Maschinenelemente verwenden.

Besonders günstig ist es, wenn erfindungsgemäß die Nocke eine im Querschnitt U-förmige Schiene ist, insbesondere eine gerade Schiene, in welcher als Nockenfolger eine Führungsrolle beweglich geführt ist, und wenn der Antriebshebel eine Kurbel ist. Die Kurbel ist hierbei gekennzeichnet durch einen Antriebszapfen, der nicht mittig, sondern exzentrisch an der Kurbel derart angebracht ist, daß die Kurbel einen kurzen und einen langen Hebel hat, jeweils bezogen auf die Drehachse der Kurbel. Durch die in der vorstehenden Weise aufgebaute Kurbelschwinge mit den zwei axial versetzten Antriebsachsen kann man von einem mit gleichmäßiger Drehzahl antreibenden Motor letztlich vom Schrittschaltgetriebe abgangsseitig eine Bewegung der Antriebswelle für das Dornrad derart geänderter Gestalt erreichen, daß zwar der Charakter der Sinuskurve erhalten bleibt, wenn man die Winkelgeschwindigkeit der Antriebswelle des Dornrades über der Zeit aufträgt, der Bewegungsbereich aber erheblich verkürzt ist zugunsten des Stillstandsbereiches, damit nämlich hinreichend viel Zeit für den Spritzvorgang mit dessen Vorbereitung und den Nachfolgeschritten gegeben ist. Definiert man als Schrittwinkel denjenigen Winkel, um welchen der Dorn sich dreht, andererseits den Schaltwinkel als denjenigen, welcher der zeitlichen Bewegung entspricht, so haben herkömmliche Schrittschaltgetriebe bei einem Schrittwinkel von 90° auch nur eine Schaltwinkel von mindestens 90°, während durch die Maßnahmen der Erfindung erreicht ist, daß man einen Schrittwinkel von 90° aber einen Schaltwinkel von 45° erhält. Dies ist besonders dann zweck-mäßig, wenn man ein Dornrad mit vier jeweils um 90° zueinander. in Drehrichtung versetzten Dornen hat. Durch entsprechende Änderung des Abstandes zwischen den Achsen der Antriebswelle und des Antriebszapfens, d.h. eingangsseitig von der Kurbelschwinge zu ausgangsseitig, zum Dornrad hin, kann man auch andere Schaltwinkel erreichen.

Die zuletzt genannten Maßnahmen der Erfindung mit Hilfe der Kurbelschwinge erlauben die Aufrechterhaltung der Sinusfunktion der Bewegung des Schrittschaltgetriebes, allerdings deren Verzerrung zugunsten einer längeren Stillstandszeit.

Weitere Vorteile, Merkmale und Anwendungsmöglichkeiten der vorliegenden Erfindung ergeben sich aus der folgenden Beschreibung eines bevorzugten Ausführungsbeispieles in Verbindung mit den Zeichnungen. Es zeigen:

Fig. 1 einen Längsschnitt durch die Vorrichtung gemäß der Erfindung, wobei links von der Mittellinie der geöffnete und rechts davon der geschlossene Zustand der Kopfplatte gezeigt ist,

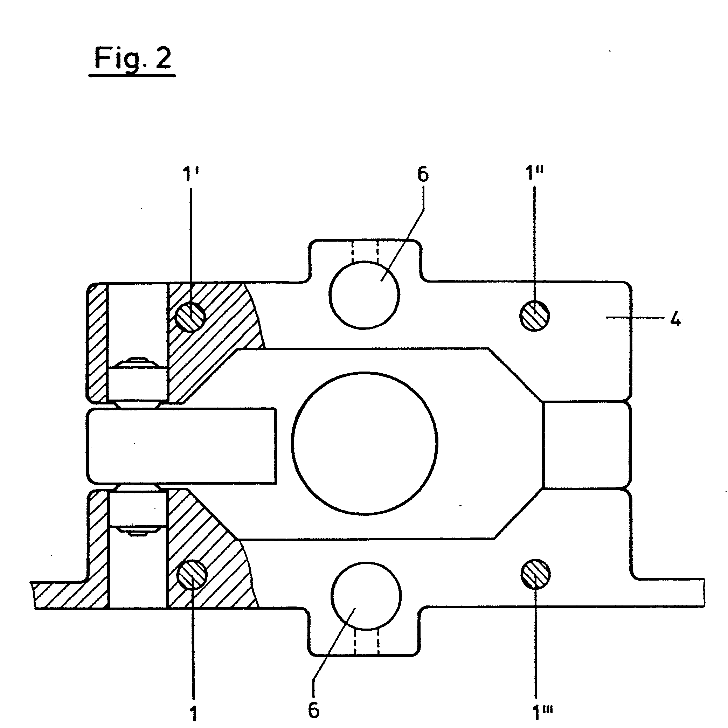

Fig. 2 die Draufsicht auf die Hauptträgerplatte mit den vier Zugankern,

Fig. 3 eine Schnittansicht entlang der Linie A-A in Fig. 1,

Fig. 4 eine ähnliche Ansicht wie bei Fig. 1, wobei jedoch eine Drehung der Blickrichtung so stattgefunden hat, daß man in Fig. 1 von links nach rechts blickt und dadurch die schwenkbaren Außenformteile erkennt, die hier als Formhälften dargestellt sind,

Fig. 5 schematisch eine Schnittansicht durch einen Teil der den Spritzraum formenden Bestandteile der Vorrichtung und des Abschnittes des bahnförmigen Materials,

Fig. 6 abgebrochen und im Schnitt eine bevorzugte Ausführungsform des Antriebes für das Schrittschaltgetriebe, nämlich mit Kurbelschwinge,

Fig. 6a eine Seitenansicht der Kurbelschwinge, wenn man in Figur 6 von links nach rechts blickt,

Fig. 7 eine Draufsicht auf das Klemmstück und die Schwinge, ohne daß die Kurbel und das Schrittschaltgetriebe dargestellt sind,

Fig. 8 schematisch die Darstellung eines mit vier Dornen versehenen Dornrades zur Veranschaulichung der Positionsveränderung und

Fig. 9 ein Zeitdiagramm der Winkelgeschwindigkeit des jeweiligen Dornrades mit jeweils zugeordneter Position.

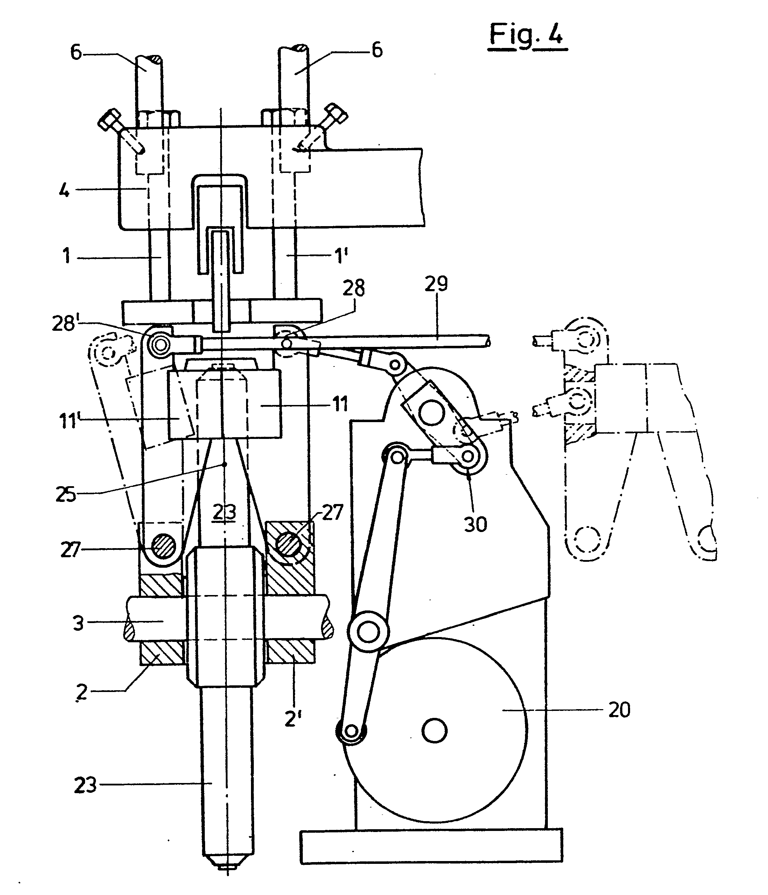

Vier Zuganker 1, 1', 1'' und 1''', die an ihrem oberen Ende mit der Hauptträgerplatte 4 verbunden sind, schaffen nach unten hin die Verbindung zu einer Lagerplatte 2 für die Antriebswelle 3 des nicht näher gezeigten Dornrades, von dem allerdings ein Dorn 23 in Fig. 4 gezeigt ist.

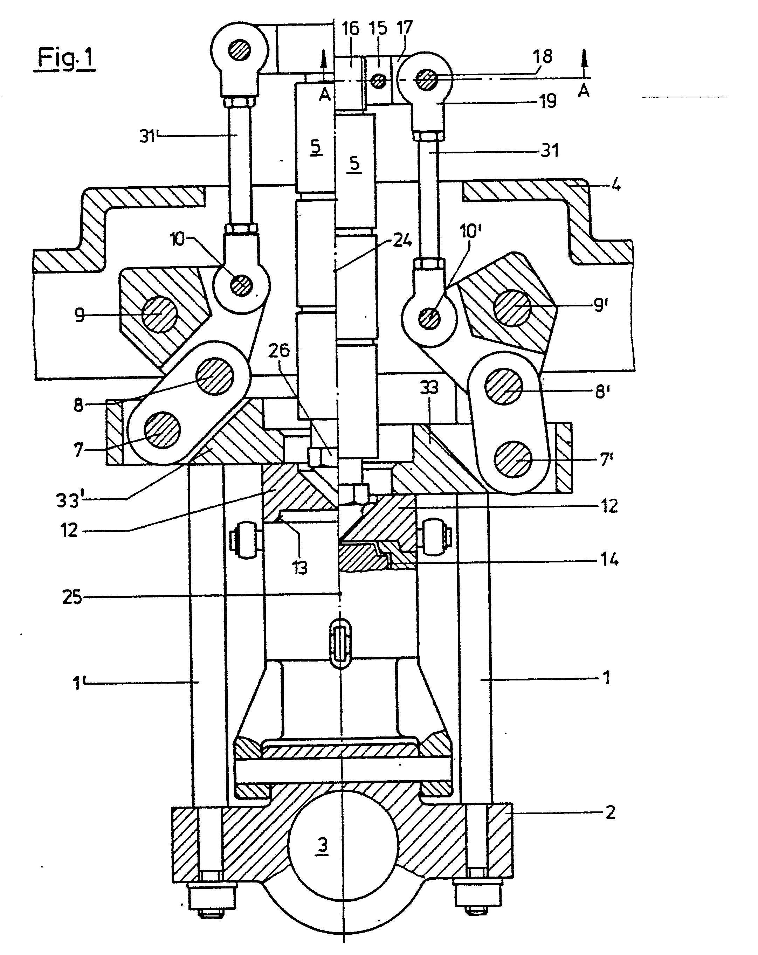

Die Anordnung der Hauptachse der Gesamtspritzeinheit 5, die gleichzeitig auch die Zentralachse 24 derselben ist, wie in Fig. 1 gezeigt, verläuft vertikal, so daß die Zentralachse 25 eines Dornes 23, wenn er sich in Flucht mit der Hauptachse 24 befindet, ebenfalls vertikal verläuft. Man versteht hieraus, daß die Lagerplatte 2 "unten" und die Hauptträgerplatte 4 "darüber" angeordnet sind.

Die Verbindung zwischen der Hauptträgerplatte 4 und der Gesamtspritzeinheit 5 erfolgt über die an der Hauptträgerplatte 4 befestigten Tragachsen 6. Längs diesem ist die Gesamtspritzeinheit 5 vertikal nach oben und unten bewegbar. Der hierfür vorgesehene Antrieb ist eine nicht gezeigte Hydraulik.

Am unteren Ende der Gesamtspritzeinheit 5 erkennt man die Düse 26. Von dieser wird der Kunststoff in den Spritzraum 36 gedrückt.

Aus Fig. 4 erkennt man, daß die Außenformteile 11, 11' um die Achsen 27 geschwenkt werden können und von den Kugelgelenken 28 bzw. 28' über Zugstangen 29 angetrieben werden. In Fig. 4 sieht man die Möglichkeit der Anordnung einer Doppelstation, wobei diese mit den Kugelgelenken 28, 28' verbundenen Zugstangen 29 über ein allgemein mit 30 bezeichnetes Hebelgelenk letztlich vom Schrittschaltgetriebe 20 betätigt werden. Dieses stellt auch den Antrieb für die Antriebswelle 3 dar, die in den Lagerplatten 2 bzw. 2' gelagert ist, die ebenfalls in Fig. 4 dargestellt ist.

Die Kopfplatte 12, die entsprechend den zwei in Fig. 1 dargestellten Positionen auf- und abbewegbar ist, befindet sich fest am Werkzeugkopfplattenträger 33, der ebenfalls wie die Kopfplatte 12 ringförmig den Düsenbereich der Gesamtspritzeinheit 5 umgibt. Der Werkzeugkopfplattenträger 33 hat die Aufgaben, über das Kniegelenk 7 - 10 die zusammengefahrenen Außenformteile 11, 11' über den Konus 13 der Kopfplatte 12 zu schließen und geschlossen zu halten und dann unter hohen Vorspannkräften die hohen Drücke des Spritzlings aus dem Spritzraum 36 aufzufangen.

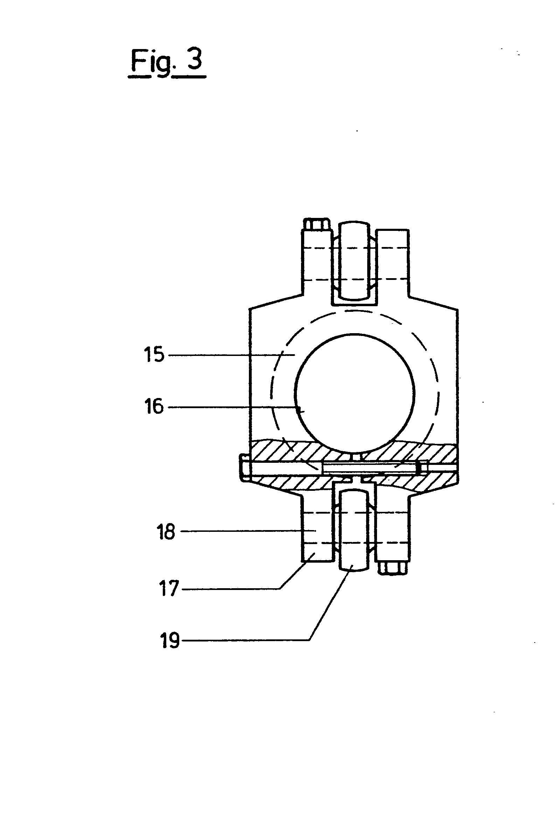

Der Antrieb für den Werkzeugkopfplattenträger 33 erfolgt über die hydraulisch bewegte Gesamtspritzeinheit 5. Der Antrieb hierfür ist eine in Fig. 3 näher dargestellte Klemmeinrichtung 15 am oberen Zylinderhals 16 der Gesamtspritzeinheit 5, der über einen Ausleger 17 die Achse 18 trägt. Über das Kugelgelenk 19 sind die Antriebsstangen 31, 31' angetrieben, die ihrerseits die Verbindung zu dem Kniegelenk 7 - 10 darstellen. Mit dem Anlegen der Düse 26 an das Spritzwerkzeug, d.h. an die Kopfplatte 12, erfolgt die Vorspannung des gesamten Werkzeuges.

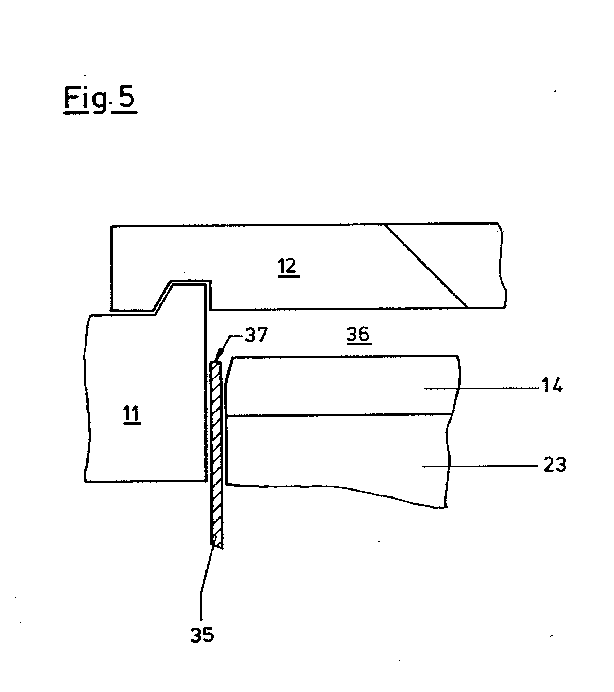

Fig. 5 zeigt, wie die Kopfplatte 12 von oben, die Außenformteile 11 (und nicht dargestellt 11') von der Seite sowie der Kern 14 von unten den Spritzraum 36 bilden mit der Ausnahme eines Spaltes im Bereich des Tubus 35. Dieses bahnförmige Material 35 befindet sich so in dem Spalt, daß die obere stirnseitige Schnittfläche 37 ein Stück weit frei in den Spritzraum 36 hineinragt, mit der Außenfläche aber an der Innenfläche der Außenform 11 in engem Kontakt liegt. In Fig. 5 ist der Tubus 35 bzw. das hier dargestellte obere Ende desselben mit separaten Linien zu den Nachbarteilen 11, 14, 23 gezeichnet, um die Deutlichkeit der Einzelteile herauszustellen. Tatsächlich aber wird durch den etwa um 10 % engeren Spalt zwischen den Teilen 11 und 14 als die Dicke des Materials 35 der Spritzraum 36 durch das Material 35 abgedichtet. Von oben durch die Mitte der Kopfplatte 12 eingespritzter Kunststoff kann nur auf die obere freie Innenseite am Ende des Tubus 35 sowie auf die stirnseitige Schnittfläche 37 gelangen, nicht aber zwischen Tubus 35 und Formteil 11.

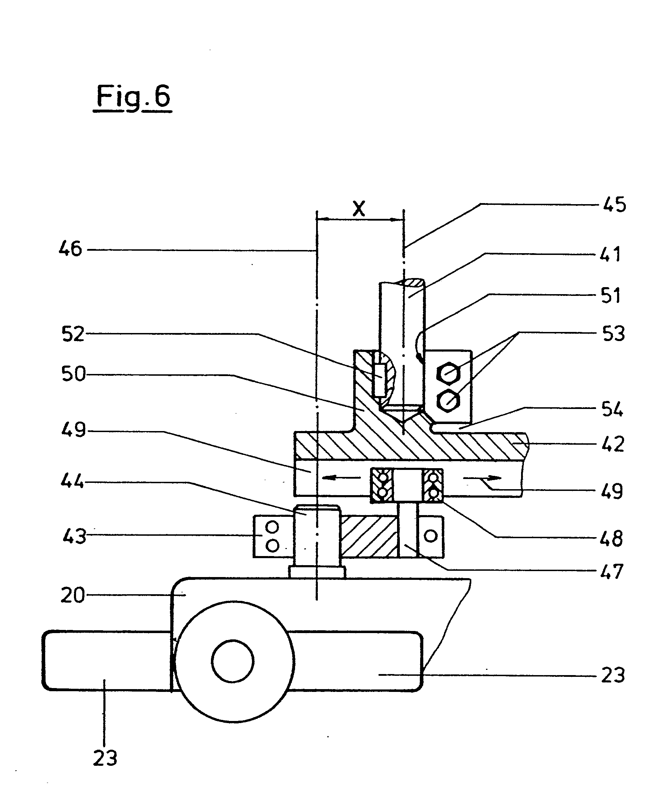

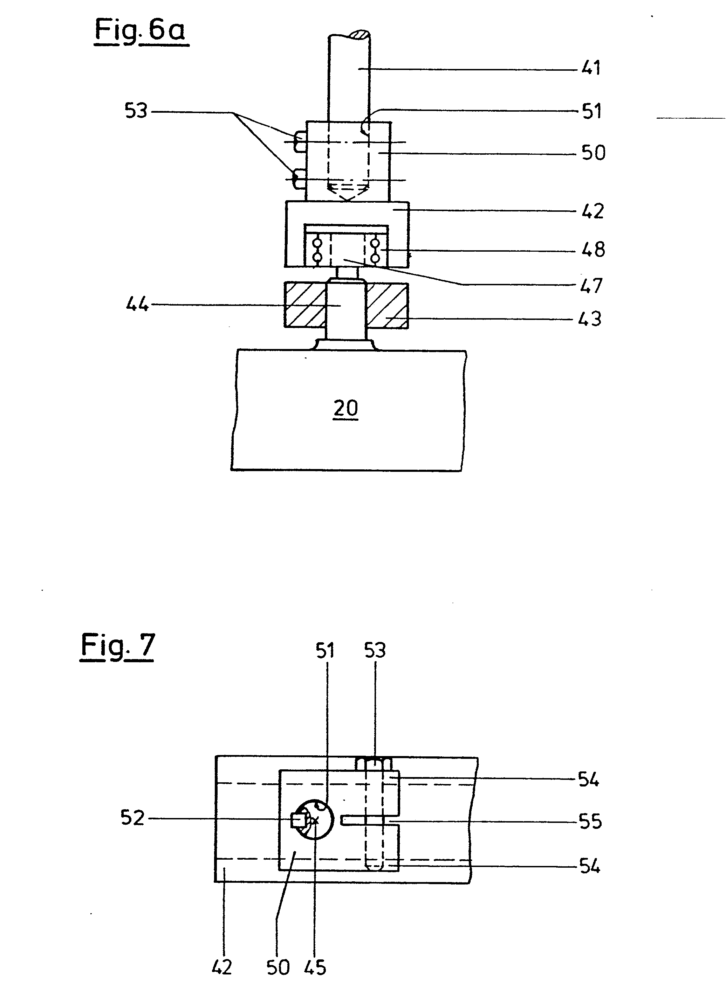

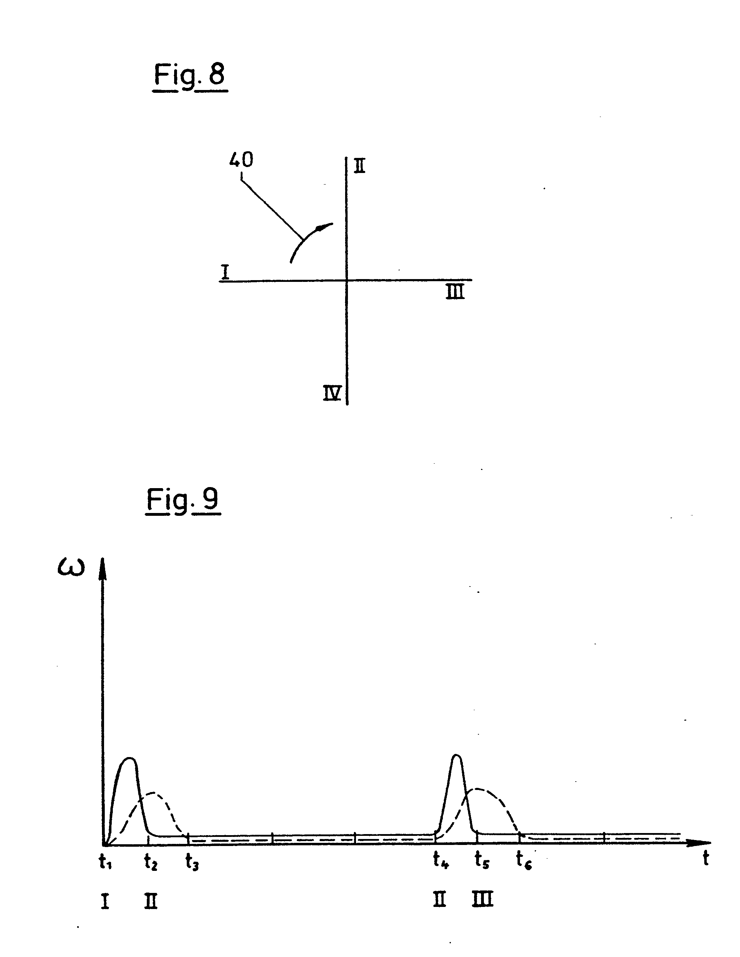

Das in Figur 6 gezeigte Schrittschaltgetriebe 20 ist im Handel erhältlich. Es hat einen Schrittwinkel (örtliche Bewegung) von 90° und auch einen Schaltwinkel (zeitliche Bewegung) von 90°. Um den Bewegungsablauf besser zu verstehen, sollten die Figuren 8 und 9 betrachtet werden. In Figur 8 ist schematisch ein Dornrad in Gestalt eines Kreuzes gezeigt, wobei ein Dorn aus der Position I bei der Bewegung längs des gebogenen Pfeiles 40 nach Drehung von 90° in die Position II gelangt. Man könnte sich in einem konkreten Ausführungsbeispiel denken, daß eine aus mit Kunststoff beschichtetem Papier bestehende Packungshülse in der Position I auf den Dorn aufgeschoben wird, hingegen das Anspritzen in der Position II erfolgt. Verständlicherweise wird für das Anspritzen Zeit benötigt, um z.B. die notwendigen Werkzeugteile in die richtige Position zum Werkstück zu bringen, dann für den Spritzvorgang selbst und schließlich für das Erkalten. Der Bewegungsablauf des Schrittschaltgetriebes 20 ist mit gestrichelter Linie in Figur 9 dargestellt. Dort wird die Winkelgeschwindigkeit $\omega$ über der Zeit t aufgetragen. Zur Zeit $t_1$ beginnt die Bewegung des betreffenden Dornes aus der Position I, z.B. in Richtung des Pfeiles 40, in die Position II, die bei der gestrichelten Kurve, d.h. bei dem herkömmlichen Schrittschaltgetriebe 20 erst bei der Zeit $t_3$ erreicht ist. In dem Zeitraum zwischen $t_3$ und $t_4$ befindet sich der betreffende Dorn in der Position II und in Ruhe. Danach beginnt der Takt erneut, wobei die maximale Winkelgeschwindigkeit des Dornrades bei alleiniger Steuerung durch das Schrittschaltgetriebe zu den Zeiten $t_2$ und $t_5$ usw. gegeben ist.

Wünscht man nun längere Stillstandszeiten bei Erhalt der vorstehend beschriebenen Sinusfunktion der Bewegung des Schrittschaltgetriebes 20, dann kann man den in den Figuren 6 und 7 dargestellten Aufbau verwenden.

Gemäß Figur 6 erfolgt der Antrieb von einer Welle 41 her über die Schwinge 42 und die Kurbel 43 in den Antriebszapfen 44 hinein zum Schrittschaltgetriebe 20 hin. Dabei sind die Achsen 45 der Antriebswelle 41 und die Achse 46 des Antriebszapfens 44 im Abstand voneinander angeordnet bzw. versetzt zueinander. Der Abstand ist in Figur 6 mit X angedeutet.

Genauer erkennt man aus den Figuren 6, 6a und 7, daß eine Kurbel 43 auf dem Antriebszapfen 44 befestigt ist und einen kurzen sowie einen langen Hebel aufweist. Am Ende des langen Hebels sitzt über einen Rollenzapfen 47 eine Führungsrolle 48, die bei Drehung der Schwinge 42 in deren zentrale Achse 45 in Richtung der Pfeile 49 bewegbar ist. Die Schwinge 42 ihrerseits ist bei dieser Ausführungsform einstückig mit einer Aufnahmehülse 50 mit einer Bohrung 51 versehen, in welcher die Antriebswelle 41 einerseits mit der Feder 52 und andererseits über die Klemmschrauben 53 befestigt ist. Die Klemmung gelingt infolge einer Ausnehmung 54, die tatsächlich eine Klemmbewegung der beiden durch den Schlitz 55 (Fig. 7) getrennten Hälften der Aufnahmehülse 50 mit Hilfe der Klemmschrauben 53 erlaubt.

Setzt man diese in den Figuren 6, 6a und 7 beschriebene Kurbelschwinge in Bewegung, dann vollführt das von dem Schrittschaltgetriebe 20 angetriebene Dornrad eine solche Bewegung, wie in Figur 9 mit der ausgezogenen Linie für einen Dorn 23 dargestellt ist. Zwar wird die Antriebswelle 41 mit gleichbleibender Winkelgeschwindigkeit angetrieben, durch die Schwinge 42 und ihrer Nockenwirkung wird letztlich aber der Antriebszapfen 44 nicht mit gleichbleibender sondern sich verändernder Winkelgeschwindigkeit angetrieben. Folglich ist das Dornrad 23 auf seinem Weg aus der Position I in die Position II einem Bewegungsablauf gemäß der mit ausgezogener Linie dargestellten Kurve in Figur 9 unterworfen.

Die Bewegung des Dornes 23 aus der Position I beginnt zur Zeit $t_1$, und der Dorn hat seine um 90° versetzte Position II bereits zur Zeit $t_2$ erreicht. Dabei gilt im Vergleich zu der gestrichelten Kurve, d.h. dem Bewegungsverlauf des im Handel erhältlichen Schrittschaltgetriebes 20, wie oben beschrieben, das nunmehr

$$t_2 =$$

FIG1/20

Mit anderen Worten ist die für die Bewegung des Dornes aus der Position I in die Position II benötigte Zeit durch die Schwinge 42 bzw. ihre Steuerfunktion auf die Hälfte verkürzt, so daß die Stillstandszeit des Dornes in der Position II vergrößert ist. Dies aber war der gewünschte Zweck. Man erkennt aus Figur 9, daß die

Stillstandzeit von dem Zeitpunkt $t_2$ bis zum Zeitpunkt $t_4$ liegt. Danach beginnt die nächste Drehung um 90°.

Durch die Kurbelschwinge erreicht man jetzt einen Schrittwinkel (örtliche Bewegung) von 90°, jedoch einen Schaltwinkel (zeitliche Bewegung) von 45°. Der Schrittwinkel von 90° muß bei einem Dornrad mit vier Dornen gemäß der vorstehend beschriebenen Ausführungsform beibehalten werden, während der Schaltwinkel, d.h. die zeitliche Bewegung, eine Beeinflussung erlaubt.

Betrachtet man die Führungsrolle 48 in der Schwinge 42, während sie sich gemäß der Pfeile 49 in Fig. 6 bei der Drehung der Schwinge 42 nach links und abwechselnd nach rechts bewegt, dann erkennt man, daß die Kurbel 43 um so schneller gedreht wird, d.h. eine um so größere Winkelgeschwindigkeit hat, je weiter die Führungsrolle 48 von der Achse 45 der Antriebswelle 41 entfernt ist. Im allgemeinen bewegt sich die Führungsrolle 48 bei Drehung der Schwinge 42 in einer Hälfte derselben, d.h. auf einer Seite von der Mittelachse 45, in dieser Hälfte allerdings oszillierend, wie die Pfeile 49 zeigen. Die Achse 46 des Antriebszapfens 44 befindet sich dann im Abstand X von der Achse 45, und zwar in der anderen Hälfte, in welcher nämlich sich die Führungsrolle 48 nicht bewegt.

**Bezugszeichenliste**

1 Zuganker
1' Zuganker
1'' Zuganker
1''' Zuganker
2 Lagerplatte
3 Antriebswelle
4 Hauptträgerplatte
5 Gesamtspritzeinheit
6 Tragständer
7 Kniegelenk
8 Kniegelenk
9 Kniegelenk
10 Kniegelenk
11 Außenformteil
11' Außenformteil
12 Kopfplatte
13 Konus
14 Kern
15 Klemmeinrichtung
16 Zylinderhals
17 Ausleger
18 Achse
19 Kugelgelenk
20 Schrittschaltgetriebe
23 Dorn
24 Zentralachse der Gesamtspritzeinheit 5
25 Zentralachse des Dorns 23
26 Düse
27 Achsen
28 Kugelgelenk
28' Kugelgelenk
29 Zugstangen
30 Hebelgelenk
31 Antriebsstange
31' Antriebsstange
33 Werkzeugkopfplattenträger
35 bahnförmiges Material, insbes. Tubus
36 Spritzraum
37 Schnittfläche
40 gebogener Pfeil
41 Antriebswelle
42 Schwinge
43 Kurbel
44 Antriebszapfen
45 Mittelachse
46 Achse
47 Rollenzapfen
48 Führungsrolle

49 Pfeile
50 Aufnahmehülse
51 Bohrung
52 Feder
53 Klemmschrauben
54 Ausnehmung
55 Schlitz

## Patentansprüche

1. Vorrichtung zum Anspritzen eines Kunststoffteiles an einen Abschnitt aus flexiblem, bahnförmigem Material, mit einer Gesamtspritzeinheit (5) mit Düse (26), mit Anspritzkopfteil (12), mit Außenformteil (11, 11') und mit einem relativ zu diesen bewegbaren Kern (14), dadurch gekennzeichnet, daß der Kern (14) auf der Stirn eines den Materialabschnitt (35) mitführenden Dornes (23) angebracht ist, welcher Teil eines um seine Antriebsachse (3) taktweise angetrieben drehbaren Dornrades ist, dessen Dorne (23) radial in einer Ebene abstehend vorgesehen sind, daß das Außenformteil (11, 11') zur Freigabe der Kreisbahn des Dornes (23) mindestens zwei seitlich zum Dorn (23) auseinander- und zusammenbewegbare Formteile (11, 11,) aufweist, die zum Zusammehalten düsenseitig mit einer beweglichen Kopfplatte (12) in form- und kraftschlüssigen Eingriff bringbar sind.

2. Vorrichtung nach Anspruch 1, dadurch gekennzeichnet, daß das Dornrad von einem Schrittschaltgetriebe (20) antreibbar ist, von welchem in snychron gekoppelter Bewegung die Außenformteile (11, 11') angetrieben sind.

3. Vorrichtung nach Anspruch 1 oder 2, dadurch gekennzeichnet, daß das Dornrad in zwei stationären Lagerplatten (2, 2')drehbar gelagert ist, die über Zuganker (1, 1', 1,,, 1'') mit einer Hauptträgerplatte (4) verbunden sind und daß die Gesamtspritzeinheit (5) an zwei an der Hauptträgerplatte (4) befestigten Tragachsen. (6) linear beweglich gehalten ist.

4. Vorrichtung nach einem der Ansprüche 1 bis 3, dadurch gekennzeichnet, daß an der Gesamtspritzeinheit (3) eine Kupplung (15 - 19) zur Verbindung von Antriebsstangen (31) befestigt ist, welche die Kopfplatte (12) mittels einer Gelenkeinrichtung (7 - 10) antreiben und gegebenenfalls verriegeln.

5. Vorrichtung nach einem der Ansprüche 1 bis 4, dadurch gekennzeichnet, daß zwischen dem Kern (14) und den Außenformteilen (11, 11') ein Spalt vorgesehen ist, dessen Größe etwas kleiner, etwa 10 % geringer, als die Dicke des in diesem Spalt dichtend aufzunehmenden, den Spritzraum (36) begrenzenden, fexiblen, bahnförmigen Materiales (35) ist (Fig. 5).

6. Vorrichtung nach einem der Ansprüche 1 bis 5, dadurch gekennzeichnet, daß der auf dem Dorn (23) aufgeklemmte Abschnitt (35) aus flexiblem, bahnförmigem Material derart weit aus dem Spalte in den Spritzraum (36) an der Innenfläche der Außenformteile (11, 11') anliegend hineinragt, daß die unbeschichtete stirnseitige Schnittfläche (37) des Abschnittes (35) mindestens im Abstand von 1/2 mm von der oberen, den Spritzraum (36) begrenzenden Fläche angeordnet ist (Fig. 5).

7. Vorrichtung nach einem der Ansprüche 1 bis 6, dadurch gekennzeichnet, daß jeder Dorn (23) runden Querschnitt hat, in Spritzstellung des Dornes (23) seine Zentralachse (25) in Flucht zur Zentralachse (24) der Gesamtspritzeinheit (5) liegt und mindestens zwei Zuganker (1, 1', 1'', 1'') parallel zum Dorn (23) am Umfang mit Abstand angeordnet sind.

8. Verwendung der Vorrichtung nach einem der Ansprüche 1 bis 7 zum Anspritzen eines Kunststoffdeckels auf einen Tubus aus flexiblem, bahnförmigem Material, insbesondere mit thermoplastischem Kunststoff beschichtetem Papier, für die Herstellung von Flüssigkeitspackungen.

9. Vorrichtung nach Anspruch 1 oder 2, dadurch gekennzeichnet, daß das Schrittschaltgetriebe (20) des taktweise drehbaren Dornrades über eine Kurbelschwinge angetrieben ist, die ein um eine Achse (45) drehbares Klemmstück (50) mit daran befestigter Nocke (42) aufweist, von welcher ein Nockenfolger (48) geführt angetrieben ist, daß der Nockenfolger (48) auf einem Antriebshebel (43) sitzt, dessen Achse (46) gleich der Achse des Schrittschaltgetriebes (20) ist, und daß die Achse (45) des Klemmstückes (50) und die Achse (46) des Schrittschaltgetriebes (20) einen Abstand (X) haben.

10. Vorrichtung nach Anspruch 9, dadurch gekennzeichnet, daß die Nocke (42) eine im Querschnitt U-förmige Schiene ist, in welcher als Nockenfolger (48) eine Führungsrolle beweglich geführt ist, und daß der Antriebshebel (43) eine Kurbel ist (Fig. 6 und 7).

## Claims

1. Apparatus for injecting a plastics portion on a section of flexible material in web form, comprising an overall injection unit (5) with nozzle (26), a head portion (12) for injecting the plastics portion on said section, an outside mould portion (11, 11') and a core (14) which is movable relative to said components, characterised in that the core (14) is disposed on the end of a bar (23) which entrains the section (35) of material and which is part of a

## 0 088 217

rotatable barbearing wheel which can be driven cyclically about its drive shaft (3) and thebars (23) of which are arranged to project radially in a plane, that the outside mould portion (11, 11'), to free the circular path of movement of the bar (23), has at least two mould porticns (11, 11') which can be moved away from and towards each other laterally with respect to the bar (23) and which can be brought into form-locking and force-locking engagement with a movable head plate (12) to hold them together at the nozzle side.

2. Apparatus according to claim 1 characterised in that the barbearing wheel is drivable by a stepping transmission means (20) by which the outside mould portions (11, 11') are driven in synchronously coupled movement.

3. Apparatus according to claim 1 or claim 2 characterised in that the bar-bearing wheel is rotatably mounted in two stationary mounting plates (2, 2') which are connected by way of tie bars (1, 1,, 1'', 1'') to a main carrier plate (4) and that the overall injection unit (5) is linearly movably mounted on two support shafts (6) which are secured to the main carrier plate (4).

4. Apparatus according to one of claims 1 to 3 characterised in that secured to the overall injection unit (5) is a coupling means (15-19) for connecting drive rcds (31) which drive the head plate (12) by means of a linkage arrangement (7-10) and possibly lock same.

5. Apparatus according to one of claims 1 to 4 characterised in that provided between the core (14) and the outside mould portions (11, 11') is a gap whose size is some what smaller, for example 10% smaller, than the thickness of the flexible web-form material (35) which is to be sealingly accommodated in said gap and which delimits the injection space (36) (Figure 5).

6. Apparatus according to one of claims 1 to 5 characterised in that the section (35) of flexible material in web form, which is claimed on the bar (23), extends out of the gap into the injection space (36), in contact against the inside surface of the outside mould portions (11, 11'), to such an extent that the uncoated end cut surface (37) of said section (35) is arranged at least at a spacing of 1/2 mm from the upper surface defining the injection space (36) (Figure 5).

7. Apparatus according to one of claims 1 to 6 characterised in that each bar (23) is of rcund cross-section, in the injection position of the bar (23) its central axis (25) is in alignement with the central axis (2 4) of the overall injection unit (5), and at least two tie bars (1, 1', 1'', 1'') are arranged at the periphery and at a spacing in parallel relationship to the bar (23).

8. Use of the apparatus according to one of claims 1 to 7 for injecting a plastics lid on to a tube of flexible material in web form, in particular paper coated with thermoplastic material, for the manufacture of liquid packs.

9. Apparatus according to claim 1 or claim 2 characterised in that the stepping transmission means (23) of the cyclically rotatable barhearing wheel is driven by way of a crank arm having a clamping member (50) rotatable about an axis (45), with a cam (42) which is secured thereto and by which a cam follower (48) is guidedly driven, that the cam follower (48) is carried on a drive lever (43) whose axis (46) is the same as the axis of the stepping transmission means (20), and that the axis (45) of the clamping member (50) and the axis (46) of the stepping transmission means (20) are at a spacing (X).

10. Apparatus according to claim 9 characterised in that the cam (42) is a bar which is of U-shaped cross-section and in which a guide roller is mcvably guided, as the cam follower (46), and that the drive lever (43) is a crank (Figures 6 and 7).

## Revendications

1. Dispositif de surmoulage d'une pièce en matière plastique sur une partie d'une bande flexible, comportant une unité générale d'emboutissage (5), avec filière (26), une tête de surmoulage (12), un élément extérieur de matrice (11, 11') et un noyau (14), mobile par rapport a ces éléments, caractérisé en ce que le noyau (14) est monte en bout d'un mandrin (23) qui avance la découpe de matériau (35) et fait partie d'une roue tournante à mandrins, entrainée de façon cadencée autour de son arbre d'entrainement (3), dont les mandrins (23) sont disposés avec un écartement radial dans un plan, et l'élément extérieur de matrice (11, 11') comporte au moins deux éléments de matrice (11, 11') pouvant être écartés et rapprochés bilatéralement par rapport au mandrin (23) pour dégager la course dudit mandrin, ces éléments pouvant être mis en engagement positif ou autre sur le côte de la filière par une plaque de tete mobile (12).

2. Dispositif selon la revendication 1, caractérisé en ce que la roue à mandrins peut être entrainée par un dispositif d'avance pas à pas (20) qui commande les éléments extérieurs de matrice (11, 11') dans un mouvement synchrone couplé.

3. Dispositif selon l'une des revendications 1 ou 2, caractérisé en ce que la roue à mandrins est montée en rotation dans deux plaques d'appui stationnaires (2, 2') reliées par des tirants (1, 1', 1'', 1'') à une plaque de support principale (4) et en ce que l'unité générale d'extrusion (5) est maintenue de façon à permettrè des mouvements linéaires sur deux axes de support (6).

4. Dispositif selon l'une des revendications 1 à 3, caractérisé en ce que l'unité générale d'extrusion (5) comporte un accouplement (13-19) pour le raccordement des tiges de commande (31) qui commandent et verrouillent, éventuellement la plaque de tête (12) à l'aide d'un dispositif d'articulation (7-10).

5. Dispositif selon l'une des revendications 1 à 4, caractérisé en ce qu'il est prévu entre le noyau (14) et les éléments extérieurs de matrice (11, 11') un interstice dont la taille est legerement inférieure, de 10 % environ, a l'épaisseur du matériau flexible en bande (35) qui doit etre logé dans cet interstice pour en assurer l'obturation et délimiter le volume de surmoulage (36) (Figure 5).

6. Dispositif selon l'une des revendications 1 à 5, caractérisé en ce que la découpe (35) de matériau flexible en bande, serré sur le mandrin (23), fait saillie hors de l'interstice et dans le volume de surmoulage (36), en restant en contact avec la surface interne des éléments extérieurs de matrice (11, 11'), et en ce que la tranche frontale non enduite (37) de la découpe (35) se trouve à une distance de 1/2 mm au moins de la surface supérieure qui délimite le volume de surmoulage (36) (Figure 5).

7. Dispositif selon l'une des revendications 1 à 6, caractérisé en ce que chaque mandrin (23) présente une section circulaire, que dans la position de surmoulage du mandrin (32), son axe central (25) se trouve dans l'alignement de l'axe central (24) de l'unité générale d'injection (5) et que deux tirants (1, 1', 1'', 1'') au moins sont disposés parall•élément au mandrin (23), sur la périphérie et à une certaine distance.

8. Utilisation du dispositif selon l'une des revendications 1 à 7, pour le surmoulage d'un couvercle de matière plastique sur un tube de matériau souple, en bande et, en particulier, de papier enduit de matière thermoplastique, en vue de la confection d'emballages pour liquides.

9. Dispositif selon l'une des revendications 1 ou 2, caractérisé en ce que le dispositif d'avance pas à pas (20) de la roue à mandrins, susceptible d'une rotation cadencée, est entrainé par l'intermédiaire d'un balancier à manivelle qui comporte un organe de serrage (50) fixé sur un axe (45) et muni d'une came (42) qui entraine, en le guidant, un galet de came (48), où ledit galet de came (48) est monté sur un levier de commande (43) dont l'axe (46) est identique, à l'aide du dispositif d'avance pas à pas (20) et où l'axe de l'organe de serrage (50) et l'axe (46) du dispositif d'avance pas à pas (20) se trouvent à une distance (X).

10. Dispositif selon la revendication 9, caractérisé en ce que la came (42) est un rail de profil en U dans lequel le galet de guidage faisant fonction de doigt de came (48) est guidé de façon mobile et que le levier de commande (43) est représenté par une manivelle (figures 6 et 7).

**Fig. 1**

## Fig. 2

<u>Fig. 3</u>

15

16

18

17

19

<u>Fig. 4</u>

# Fig. 5

## Fig.6

## Fig. 6a

41

53

51

50

42

48

47

44

43

20

## Fig. 7

51  53

54

52

55

54

42  50  45

## Fig. 8

## Fig. 9